# EUROPEAN PATENT SPECIFICATION

(11) **EP 3 508 800 B1**
(45) Date of publication and mention of the grant of the patent: **28.10.2020**
(21) Application number: 16915103.2
(22) Date of filing: 31.08.2016
(51) Int. Cl.: F24D 19/10, G06Q 50/06

(54) **HOT WATER SUPPLY SYSTEM, CONTROL DEVICE, CONTROL METHOD AND PROGRAM**
WARMWASSERVERSORGUNGSSYSTEM, STEUERUNGSVORRICHTUNG, STEUERUNGSVERFAHREN UND PROGRAMM
SYSTÈME D'ALIMENTATION EN EAU CHAUDE, DISPOSITIF DE COMMANDE, PROCÉDÉ DE COMMANDE ET PROGRAMME

(43) Date of publication of application: 10.07.2019
(73) Proprietor: Mitsubishi Electric Corporation, Chiyoda-ku Tokyo 100-8310 (JP)
(72) Inventor: MINEZAWA Satoshi, Tokyo 100-8310 (JP); TODA Akihiro, Tokyo 100-8310 (JP); AKAGI Satoshi, Tokyo 100-8310 (JP); ARAI Takashi, Tokyo 100-8310 (JP)
(74) Representative: Studio Torta S.p.A.
(86) International application number: PCT/JP2016/075469
(87) International publication number: WO 2018/042542

(56) References cited:
- JP-A- 2006 010 296
- JP-A- 2009 257 618
- JP-A- 2010 270 997
- JP-A- 2011 191 039
- JP-A- 2012 032 117
- JP-A- 2012 127 633
- JP-A- 2012 251 766
- JP-A- 2014 066 496
- JP-A- 2014 238 247
- JP-A- 2015 004 458
- JP-A- 2015 158 362

## Description

### Technical Field

The present disclosure relates to a hot water supply system, a control device, a control method, and a computer program.

### Background Art

In recent years water heaters are coming into increased use that store heated hot water in a hot water storage tank and that supply hot water from the storage tank as required. Such a water heater is proposed that heats up water beforehand by consuming power in a period when an electricity billing rate is low, and thereafter appropriately heats up a relatively small amount of water, thus preventing running out of hot water (for example, see Patent Literature 1).

In Patent Literature 1, a device is described that, in response to a case in which a hot water supply amount varies relative to an average hot water amount, controls a heating operation to prevent running out of hot water. This device can heat an appropriate amount of hot water even when there is large variation in the hot water supply amount.

### Citation List

### Patent Literature

Patent Literature 1: Unexamined Japanese Patent Application Kokai Publication No. 2012-225601
Patent literature 2: JP 2015 004458 A discloses a hot water supply system according to the preamble of claim 1.

### Summary of Invention

### Technical Problem

Supplying of a large amount of hot water when a user takes a bath is generally desired of a water heater. Although the period of bathing differs from person to person, a period in which demand for hot water due to multiple users taking baths is thought to be disproportionately concentrated in the evening through nighttime. Thus the water heater operation to prevent running out of hot water by the water heater represented by the device described in Patent Literature 1 is executed with disproportionate concentration in this period.

When operation to heat up water to prevent the running out of hot water is concentrated in a fixed period, a power consumption peak occurs in the period. The peak of power consumption that occurs due to operation of the water heater in this manner is undesirable due the possibilities of a lowering of utilization efficiency of a power-generating facility supplying power to the water heater and an increase in the electricity billing rate.

In consideration of the aforementioned circumstances, an objective of the present disclosure is to suppress the peak of power consumption that occurs due to operation of water heaters.

### Solution to Problem

In order to attain the aforementioned objective, a hot water supply system of the present disclosure includes:
a first water heater and a second water heater configured to supply hot water from a hot water storage tank and operate in a mode in which, upon a remaining amount of hot water stored in the hot water storage tank becoming less than a first threshold, power is consumed to generate hot water; and
a control device configured to, in a time slot in which the first water heater and the second water heater operate in the mode, control one water heater, among the first water heater and the second water heater, to cause the one water heater to generate hot water prior to a time corresponding to a supply time for supply of hot water in a past time slot by the one water heater, the first water heater and the second water heater operating in the mode in the past time slot; the one water heater being a water heater for which the remaining amount of hot water is smallest, or a water heater for which a difference between the remaining amount of hot water and the first threshold is smallest, or a water heater for which a hot-water amount to be generated is smallest; and
wherein the system being characterized in that the control device is configured
   to collect measurement values of power supplied through a power line to a facility in which the first water heater is disposed, and to collect measurement values of power supplied through a power line to a facility in which the second water heater is disposed, and
   to control the one water heater to cause the one water heater to generate hot water, in the time slot, in a period, prior to the time corresponding to the supply time, corresponding to a period at which an integrated value of a sum of the measurement values collected in the past time slot is smaller than a second threshold.

### Advantageous Effects of Invention

According to the present disclosure, one hot water heater generates hot water prior to a time corresponding to a supply time for supply of hot water in the past. Thus at the time corresponding to the supply time, the generation of hot water by the corresponding water heater is suppressed. Thus the operation periods of the first water heater and the second water heater are dispersed relative to each other, and therefore the peak of power consumption that occurs due to operation of these water heaters can be suppressed.

### Brief Description of Drawings

FIG. 1 illustrates a configuration of a hot water supply system according to Embodiment 1;
FIG. 2 illustrates a hardware configuration of a control device and a water heater;
FIG. 3 illustrates a functional configuration of the hot water supply system according to Embodiment 1;
FIG. 4 illustrates an example of content of data acquired by a data acquirer;
FIG. 5 illustrates trending in power consumption;
FIG. 6 is a flowchart illustrating control processing;
FIG. 7 is a first drawing for description of an estimation of a supply time;
FIG. 8 is a second drawing for description of the estimation of the supply time;
FIG. 9 is a drawing for description of determination of a generation time according to Embodiment 1;
FIG. 10 illustrates a configuration of a hot water supply system according to Embodiment 2;
FIG. 11 illustrates a functional configuration of the hot water supply system according to Embodiment 2;
FIG. 12 is a drawing for description of determination of a generation time according to Embodiment 2;
FIG. 13 is a first drawing for description of a generation time according to Embodiment 3;
FIG. 14 is a second drawing for description of the generation time according to Embodiment 3;
FIG. 15 illustrates trending in total power occurring in a case in which hot water is generated after a time when the total power is minimum;
FIG. 16 illustrates generation of hot water in a period formed from time slots in which an integrated value of the total power is less than or equal to a threshold; and
FIG. 17 illustrates an example of a display screen image.

### Description of Embodiments

Embodiments of the present disclosure are described below in detail with reference to drawings.

### Embodiment 1

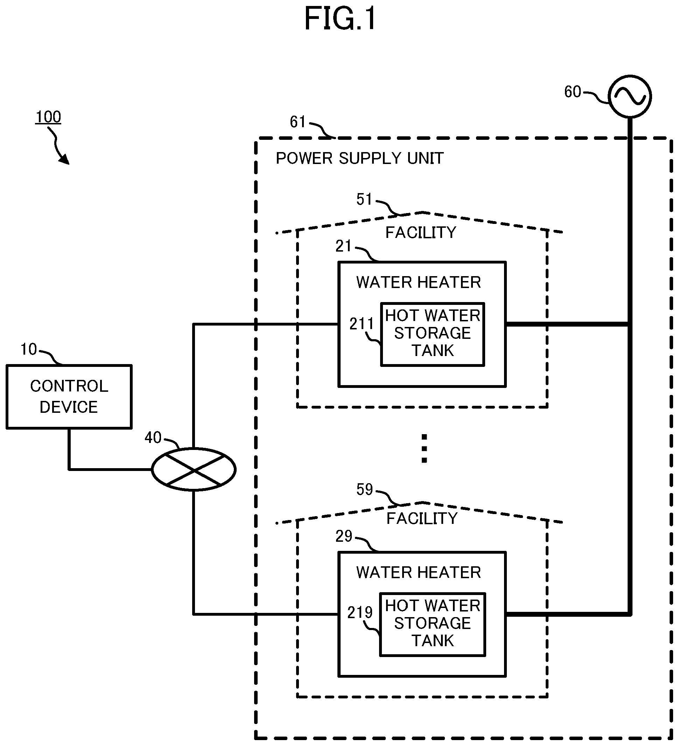

FIG. 1 illustrates a hot water supply system 100 according to Embodiment 1. The hot water supply system 100 is a system that suppresses a peak of power consumption by causing dispersal of periods of operation of water heaters. As illustrated in FIG. 1, the hot water supply system 100 includes: a control device 10 that controls hot water heaters 21 to 29 via a network 40, and water heaters 21 to 29 that generate hot water by consuming power supplied via power lines from a power source 60. Further, the solid lines connecting to the network 40 in FIG. 1 indicate communication lines, and the thick solid lines connecting to the power source 60 indicates power lines.

Examples of the network 40 include the Internet, a local area network (LAN), and a dedicated line. The control device 10 and the water heaters 21 to 29 perform wired communication or wireless communication via the network 40.

The control device 10 is a server connected to the water heaters 21 to 29 via the network 40. The control device 10 causes dispersal of times of operation of the water heaters 21 to 29 by managing the operation states of the water heaters 21 to 29 to control the water heaters 21 to 29.

The water heaters 21 to 29 include hot water storage tanks 211 to 219, respectively. In the hot water storage tank 211, the water heater 21 stores hot water generated by heating municipal tap water by a (non-illustrated) heat pump unit, and supply hot water from the hot water storage tank 211 in response to a request from a user using a facility 51 where the water heater 21 is arranged. The supply of hot water by the other water heaters is similar, and for example, the water heater 29 supplies hot water from the hot water storage tank 219 in response to a request from a user using a facility 59 where the water heater 29 is arranged.

The facilities 51 to 59, for example, are homes or buildings. In the case in which the facilities 51 to 59 are homes, the water heaters 21 to 29 supply hot water to a user who is an inhabitant of the home. The facilities 51 to 59 form power supply units 61. The power supply unit 61 is an aggregation of loads capable of being supplied power from the power source 60, and for example, is an aggregation of homes having facilities 51 to 59 that are homes, or is a region having facilities 51 to 59 that are buildings.

The power source 60, for example, is a commercial power source, a distributed-type power source, or a combination of a commercial power source and a distributed-type power source. In the case in which the power supply unit 61 is an aggregation of homes, the power source 60 is a commercial power source and solar power generators, wind power generators, fuel cells, or a combination of such installed at the aggregation of homes.

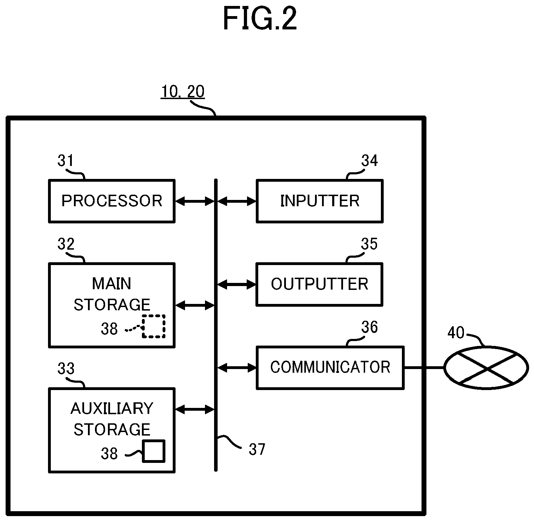

FIG. 2 illustrates a hardware configuration of the control device 10 and the water heater 20. The water heater 20 here generically indicates the water heaters 21 to 29. The hardware configuration of the water heater 20 illustrated in FIG. 2 is a configuration for achieving computer functions, and FIG. 2 omits the hot water storage tanks 211 to 219, heat pump units, water piping, water supply pumps, and valves.

As illustrated in FIG. 2, the control device 10 and the water heater 20 are formed as a computer that includes a processor 31, a main storage 32, an auxiliary storage 33, an inputter 34, an outputter 35, and a communicator 36. Each of the main storage 32, the auxiliary storage 33, the inputter 34, the outputter 35, and the communicator 36 is connected to the processor 31 via the internal bus 37.

The processor 31 includes a central processing unit (CPU). The processor 31 achieves below-described functions by executing a program 38 stored in the auxiliary storage 33.

The main storage 32 includes a random access memory (RAM). The main storage 32 loads the program 38 from the auxiliary storage 33. Thereafter, the main storage 32 is used as a working area of the processor 31.

The auxiliary storage 33 includes non-volatile memory as represented by a hard disc drive (HDD) or a flash memory. The auxiliary storage 33 stores, in addition to the program 38, various types of data used in processing by the processor 31. Then in accordance with an instruction of the processor 31, the auxiliary storage 33 supplies to the processor 31 data used by the processor 31, and stores data supplied from the processor 31.

The inputter 34 includes an input key and electrostatic capacitance-type pointing device. The inputter 34 acquires information inputted by the user, and sends notification to the processor 31.

The outputter 35 includes a display device, as represented by a liquid crystal display (LCD), and a speaker. The display device of the outputter 35 according to the present embodiment includes a touch screen that is integrally formed with the pointing device that is included in the inputter 34. The outputter 35 regenerates a sound signal and displays to the user various types of images and text in accordance with instructions from the processor 31.

The communicator 36 includes a communication interface circuit for communicating via the network 40 with external devices connected via communication lines. The communicator 36 sends notification to the processor 31 of information included in a signal received from the outside, and transmits to external equipment a signal indicating information output from the processor 31.

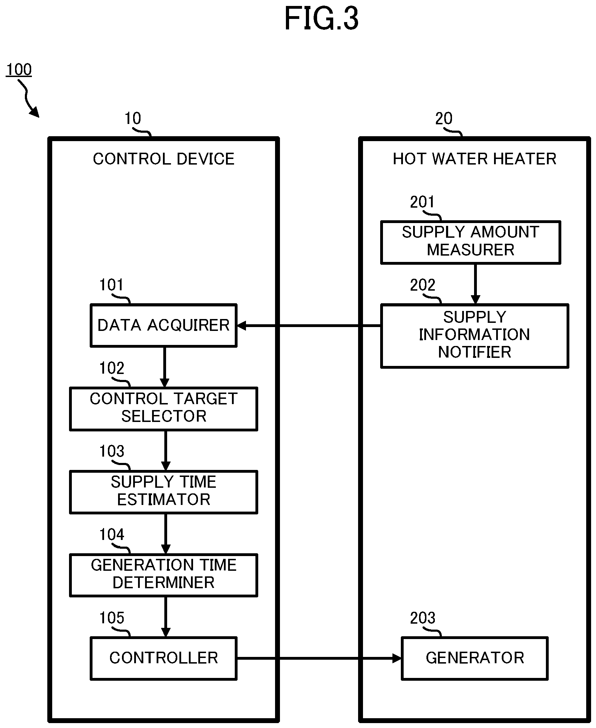

FIG. 3 illustrates a functional configuration of the hot water supply system 100. Each of the functions of the control device 10 and the water heater 20 illustrated in FIG. 3 is achieved by coordinated operation of the aforementioned hardware.

As illustrated in FIG. 3, the control device 10 includes as functions thereof: a data acquirer 101 that acquires data from the water heater 20, a control target selector 102 that selects the water heater 20 that serves as a control target, a supply time estimator 103 that estimates a time of supply of hot water by the water heater 20, a generation time determiner 104 that determines a time for causing the water heater 20 selected as the control target to generate hot water, and a controller 105 that controls the water heater 20.

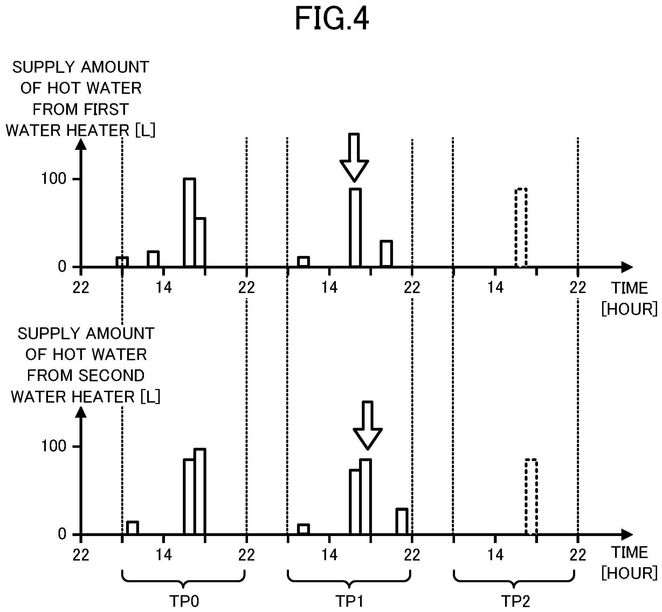

The data acquirer 101 is mainly achieved cooperatively between the processor 31 and the communicator 36 of the control device 10. The data acquirer 101 repeatedly acquires from the water heater 20 data indicating supply information that includes the supply amount of hot water and the time of supply of hot water by the water heater 20. Thus the data acquirer 101, as illustrated in FIG. 4, acquires data that is a time series indicating the supply amount of hot water from the water heater 20.

Further, in FIG. 4, the data indicating the supply amount acquired by the data acquirer 101 is indicated by the solid-line bars. The dashed-line bars indicate estimation values of the supply amount occurring in the future. The estimation of the supply amount is described below. Further, running-out-of-hot-water prevention time slots TP0, TP1, and TP2 are indicated in FIG. 4. The running-out-of-hot-water prevention time slots TP0 to TP2 are described below.

The water heater 20 runs in a water-heating mode that heats water of a target hot-water storage amount in a specific period, the target hot-water storage amount being a hot-water amount estimated, on the basis of a hot-water supply history occurring in the past, to be generated by demand in a future fixed time slot. The future fixed time slot according to the present embodiment is a 24 hour period, without particular limitation, and the future fixed time slot may be shorter or longer than the 24 hour period. Further, although the specified period according to the present embodiment is a period in which an electricity billing rate for power supplied from the commercial power supply is low, the specified period is not limited to such a period, and the specified period may be a period in which power generation is anticipated from a distributed type power source. Further, the expression "heating water" means generating hot water.

Upon the water heater 20 completing operation in the water-heating mode, the water heater 20 monitors the remaining amount of hot water stored in the hot water storage tanks 211 to 219, and operates in a running-out-of-hot-water prevention mode that generates hot water of a relatively small amount when the remaining amount becomes less than a threshold. The remaining amount generated in the running-out-of-hot-water prevention mode in the present embodiment is the remaining amount expected to be demanded after a point in time when the remaining amount becomes less than the threshold value. This hot-water amount is calculated by subtracting from the target hot-water storage amount the threshold and the hot-water amount supplied after completion of running in the water-heating mode, although the calculation procedure is not limited to this calculation method.

Thereafter, the water heater 20 operates again in the water-heating mode in the specified period.

In this manner, the water heater 20 repeatedly alternates between normally operating in the water-heating mode, and operating in the running-out-of-hot-water prevention mode. The running-out-of-hot-water prevention time slots TP0 to TP2 indicated in FIG. 4 are time slots in which the water heater 20 runs in the running-out-of-hot-water prevention mode.

Further, the specified period of operation in the water-heating mode of the water heaters 21 to 29 for receiving the supply of power from the common power source 60 is normally used in common by the water heaters 21 to 29. That is, the running-out-of-hot-water prevention time slots TP0 to TP2 are used in common by the water heaters 21 to 29.

Again with reference to FIG. 3, the control target selector 102 is mainly achieved by the processor 31 of the control device 10. The control target selector 102 determines a unit count of the water heaters 20 serving as the control targets. The unit count of the water heaters 20 serving as the control targets is at least one and is less than the total count of the water heaters 20. Further, on the basis of the data acquired by the data acquirer 101, the control target selector 102 selects, from among the water heaters 21 to 29, a water heater 20 that has a high probability of generating hot water in the future running-out-of-hot-water prevention time slot TP2.

The supply time estimator 103 is mainly achieved by the processor 31 of the control device 10. The supply time estimator 103, on the basis of the data acquired by the data acquirer 101, estimates the time of supply of hot water by the water heater 20 in the future running-out-of-hot-water prevention time slot TP2. In FIG. 4, the supply of hot water estimated by the supply time estimator 103 is indicated by the dashed-line bars. In the example of FIG. 4, as indicated by the outlined-type arrows, the supply time estimator 103 uses the time when the supply amount of hot water becomes maximum in the running-out-of-hot-water prevention time slot TP1 as the estimation time for the supply of hot water in the running-out-of-hot-water prevention time slot TP2. Further, the supply time estimator 103 estimates the maximum hot-water amount supplied in the running-out-of-hot-water prevention time slot TP1 to also be supplied in the running-out-of-hot-water prevention time slot TP2.

Further, the time of occurrence of demand for a small amount of hot water is not fixed, and estimating this time of occurrence is considered to be difficult. However, the time of the maximum supply amount of hot water corresponds to the time of bathing, and the demand for hot water is assumed to occur similarly to such demand in the previous day. Thus as in the example illustrated in FIG. 4, the supply time estimator 103 estimates the supply of hot water to occur in the running-out-of-hot-water prevention time slot TP2.

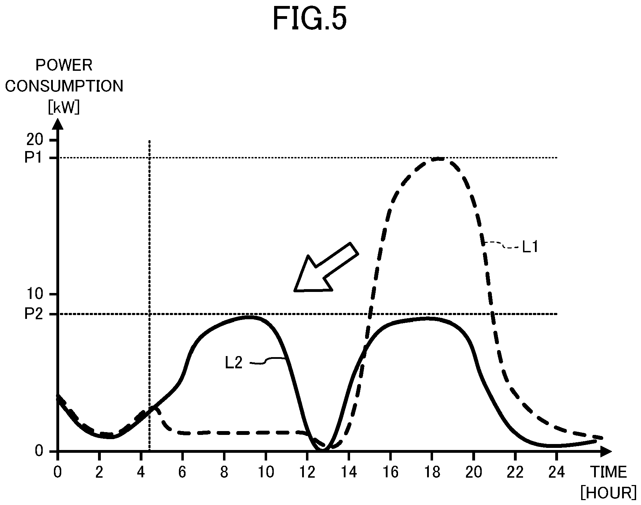

Here, as illustrated in FIG. 4, the hot water demand occurring in response to bathing is generally concentrated in the evening through nighttime, and the supply time estimator 103 estimates that a comparatively large amount of hot water supply is concentrated in the evening through nighttime in the running-out-of-hot-water prevention time slot TP2. When a comparatively large amount of hot water supply is concentrated, due to operation in the running-out-of-hot-water prevention mode, the power consumption for generation of hot water by the hot water heater 20 is also concentrated in the evening through nighttime. In FIG. 5, the concentration of power consumption by operation of the water heaters 21 to 29 in this manner is indicated by a line LI.

Again with reference to FIG. 3, the generation time determiner 104 is mainly achieved by the processor 31 of the control device 10. The generation time determiner 104 determines the time for causing generation of hot water by some of the water heaters 20 selected as the control target. This time is a time prior to the time estimated for the supply of hot water by the control target water heater 20. The power consumption due to operation of the water heaters 21 to 29 when causing the portion of the water heaters 20 to generate hot water prior to the time estimated for the supply of hot water is indicated by the line L2 in FIG. 5. Due to shifting of a portion of the energy consumption of the peak indicated by a line L1, as indicated by the line L2, the peak value of power consumption is understood to be reduced from P1 to P2.

Again with reference to FIG. 3, the controller 105 is mainly achieved cooperatively by the processor 31 and the communicator 36 of the control device 10. The controller 105 controls the water heater 20 selected as the control target, and thus causes the water heater 20 to generate hot water at the time determined by the generation time determiner 104.

Functional configuration of the water heater 20 is described next. The water heater 20 includes as functions thereof: a supply amount measurer 201 that measures the supply amount of hot water by a non-illustrated flowrate sensor, a supply information notifier 202 that sends notification to the control device 10 of the measurement result due to measurement by the supply amount measurer 201, and a generator 203 that generates hot water in response to a control signal transmitted from the control device 10.

Further, the supply information notifier 202 periodically sends notification of the supply amount of hot water. The cycle of this notification, for example, is 1 minute long, 5 minutes long, or 30 minutes long. In the present embodiment, due to the supply information notifier 202 sending notification of the supply amount of hot water in a relatively short cycle, the control device 10 can use the time of receiving of the notification as the time for supplying hot water. However, such operation is not limiting, and the supply information notifier 202 may transmit to the control device 10 the data indicating the time of occurrence of the supply of hot water in association with data indicating the supply amount of hot water.

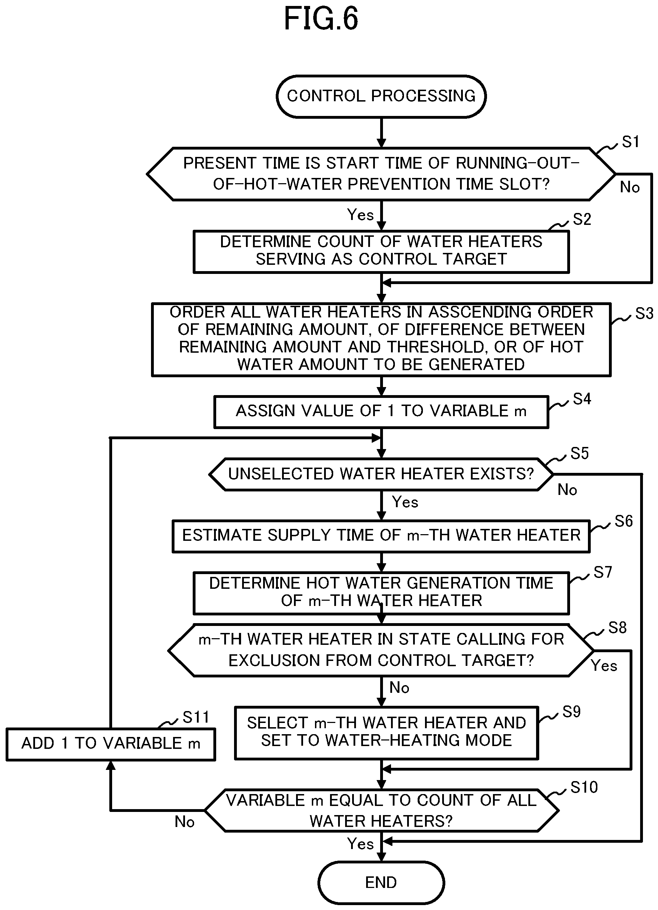

Next, an example of control processing executed by the control device 10 is described with reference to FIGS. 6 to 9. The control processing illustrated in FIG. 6 is executed periodically. The cycle of execution of the control processing, for example, is 10 minutes long or 1 hour long.

In the control processing, the control device 10 firstly determines whether the present time is the start time of the running-out-of-hot-water prevention time slot (step S1). For example, the processor 31 of the control device 10 determines whether the present time is 6 o'clock, which is the start time of the running-out-of-hot-water prevention time slot TP2 indicated in FIG. 4.

In the case of determination that the present time is not the start time of the running-out-of-hot-water prevention time slot (NO in step S1), processing of the control device 10 moves to step S3. However, in the case of determination that the present time is the start time of the running-out-of-hot-water prevention time slot (YES in step S1), the control device 10 determines the unit count of the water heaters 20 serving as the control target (step S2). Specifically, in a state in which all the water heaters 20 are taken to not be selected, the control target selector 102 determines that the unit count of the control target water heaters 20 is one half the total number of all of the water heaters 20. Thus the control device 10 newly selects only the determined unit count of water heaters 20 to serve as the control target.

Thereafter, the control target selector 102 of the control device 10 assigns an ordering of all the water heaters 20 in ascending order of the remaining amount of hot water, in ascending order of a difference between the threshold for generation of hot water and the remaining amount, or in ascending order of a hot-water amount to be generated (step S3). Thus all the water heaters 20 are sorted in order of height of probability that hot water is generated in the running-out-of-hot-water prevention time slot.

Next, the control device 10 assigns a value of 1 to a variable m that is used for distinguishing all the water heaters 20 in the ordering assigned instep S3 (step S4). That is, if m is 1, then the m-th water heater 20 corresponds to the water heater 20 that has the highest probability of generating hot water in the running-out-of-hot-water prevention time slot.

Next, the control device 10 determines whether a water heater 20 exists that is unselected (step S5). That is to say, the control target selector 102 determines whether the unit count of the previously selected water heaters 20 has reached the unit count determined in step S2.

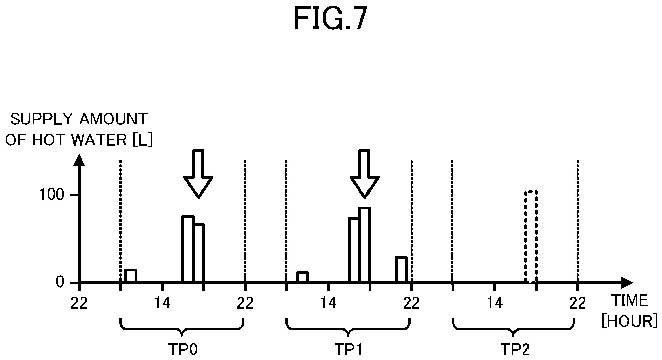

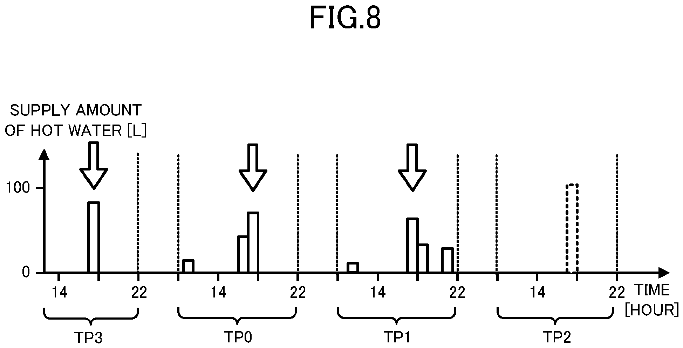

Upon determination that no water heaters 20 exist that are not selected (NO in step S5), the control device 10 ends the control processing. However, upon determination that a water heater 20 exists that is not selected (YES in step S5), the supply time estimator 103 of the control device 10 estimates the supply time of the m-th water heater 20 (step S6). The estimation procedure of this supply time is described with reference to FIGS. 7 and 8 for an example different from the example illustrated in FIG. 4.

FIG. 7 illustrates an example of estimation, as the supply time of hot water occurring in the running-out-of-hot-water prevention time slot TP2, the time, in the running-out-of-hot-water prevention time slot TP1, when the hot water supply amount increases to more than that of the past running-out-of-hot-water prevention time slot TP0. Specifically, the supply amount of hot water at the time indicated by the outlined-type arrow increases at the running-out-of-hot-water prevention time slot TP1 from that of running-out-of-hot-water prevention time slot TP0. In the case in which the supply amount of hot water increases to more than that of the prior running-out-of-hot-water prevention time slot at such a specific time, the supplying of hot water is estimated to also occur in the future running-out-of-hot-water prevention time slot TP2.

FIG. 8 illustrates an example of estimation, as the supply time of hot water occurring in the running-out-of-hot-water prevention time slot TP2, a time in which hot water is supplied periodically over the running-out-of-hot-water prevention time slots TP3, TP0, and TP1. Specifically, in each of the running-out-of-hot-water prevention time slots TP3, TP0, and TP1, hot water is supplied at the specific time indicated by the outlined-type arrow. In the case in which hot water is supplied periodically in this manner, the supplying of hot water is estimated to occur also in the future running-out-of-hot-water prevention time slot TP2.

Again in reference to FIG. 6, immediately following step S6, the control device 10 determines the generation time of hot water by the m-th water heater 20 (step S7). Specifically, the generation time determiner 104 determines as the generation time a time, in the running-out-of-hot-water prevention time slot TP2, prior to the time estimated in step S6. The generation time determiner 104 according to the present embodiment determines that the present time is the generation time (i) when the present time is a time prior to the time estimated in step S6, and the present time is not a time when a water heater 20 other than the m-th water heater 20 is supplying hot water, or (ii) when the present time corresponds to a time when the supply amount of hot water by another water heater 20 in the running-out-of-hot-water prevention time slot TP1 is smaller than a predetermined amount.

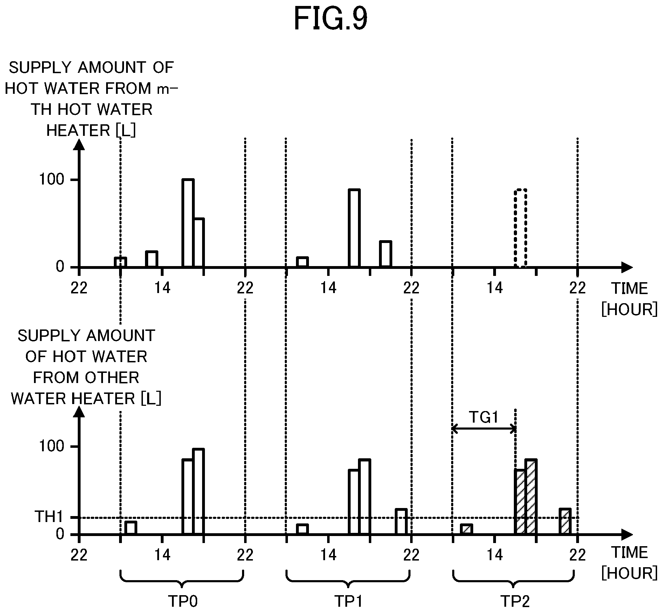

In FIG. 9, the period TG1 is indicated that includes the generation time determined by the generation time determiner 104. Further, the hatched bars in FIG. 9 indicates an example of the supply of hot water by the other water heater 20 transitioning in the running-out-of-hot-water prevention time slot TP2 in the same manner as in the running-out-of-hot-water prevention time slot TP1. As illustrated in FIG. 9, the period TG1 is prior to the time at which the m-th water heater 20 supply of hot water is estimated to occur in the running-out-of-hot-water prevention time slot TP2, and is a period in which the supply amount of hot water by the other water heater 20 is lower than a threshold TH1.

At the time at which the other water heater 20 supplies hot water, a possibility exists that the other water heater 20 generates hot water. When the m-th water heater 20 is made to generate hot water at such a time, power consumption becomes concentrated at that time, and such concentration of power consumption is undesirable. Thus the generation time determiner 104 preferably determines a time when there is no supply of hot water by another water heater 20, or a time when the supply of hot water is low. Such operation enables reliable dispersal of power consumption.

Again with reference to FIG. 6, immediately following step S7, the control device 10 determines whether the m-th water heater 20 is in a state calling for exclusion from being a control target (step S8). Specifically, in the case in which the present time exceeds the supply time estimated in step S6, in the case in which the m-th water heater 20 is presently operating in the water-heating mode, or in the case in which no time capable of determination by the generation time determiner 104 exists for the m-th water heater 20, the control target selector 102 determines that the m-th water heater 20 is in a state calling for exclusion from being a control target.

Upon determination that the m-th water heater 20 is in a state calling for exclusion from being a control target (YES in step S8), processing by the control device 10 proceeds to step S10. However, upon determination that the m-th water heater 20 is not in a state calling for exclusion from being a control target (NO in step S8), the control device 10 selects the m-th water heater 20 and sets the operation status of the selected water heater 20 to the water-heating mode (step S9). Specifically, the control target selector 102 selects the m-th water heater 20 as a control target water heater 20. Further, the controller 105 controls the selected water heater 20 to cause generation of hot water by causing operation in the water-heating mode. Further, the procedure for the controller 105 to cause the generation of hot water by the water heater 20 is not limited to setting to the water-heating mode, and the generation of hot water may be caused by maintaining the running-out-of-hot-water prevention mode as is. Further, the generated hot-water amount may be equivalent to the hot-water amount generated in the water-heating mode, may be equivalent to the hot-water amount generated in the running-out-of-hot-water prevention mode, or may be less than the hot-water amount generated in the running-out-of-hot-water prevention mode. In the case in which the generated hot-water amount is less than the hot-water amount generated in the running-out-of-hot-water prevention mode, the peak of power consumption can be further suppressed.

Next, the control device 10 determines whether the value of the variable m is equal to the total count of all the water heaters 20 (step S10). In the case in which the value of the variable m is not equal to the total count of all the water heaters 20 (NO in step S10), the control device 10 adds one to the variable m (step S11) and repeats the processing of step S5 and beyond. However, in the case of determination that the value of the variable m is equal to the total count of all the water heaters 20 (YES in step S10), the control device 10 ends the control processing.

In the aforementioned manner, the control device 10 selects, from among the water heaters 20, a portion of the water heaters 20, and then for the selected water heaters 20, estimates the supply time occurring in the future running-out-of-hot-water prevention time slot from the supply time at which hot water is supplied in a past running-out-of-hot-water prevention time slot. Then the control device 10 causes the generation of hot water by the selected water heater 20 prior to the estimated supply time in the future running-out-of-hot-water prevention time slot. Such operation, at the estimated supply time, has effects such as eliminating the generation of hot water by the selected water heater 20, and reducing the hot-water amount generated by the selected water heater 20. Thus in the running-out-of-hot-water prevention time slot, the concentration of hot water demand and power consumption can be prevented beforehand. Thus the peak of power consumption can be suppressed.

Further, the control device 10 estimates as the supply time occurring in the future running-out-of-hot-water prevention time slot: the time when the supply amount of hot water is maximum in the past running-out-of-hot-water prevention time slot, the time when the supply amount of hot water is increased in the past running-out-of-hot-water prevention time slot versus the prior running-out-of-hot-water prevention time slot, or alternatively, the time when hot water, in the past running-out-of-hot-water prevention time slot, is supplied periodically in running-out-of-hot-water prevention time slots previous thereto. Such operation increase accuracy of the estimation of the supply time of hot water in the future running-out-of-hot-water prevention time slot, and can make the estimation of the supply time more reliable.

Further, the control device 10 sets, as the time for causing generation of hot water by the selected water heater 20, the time when the another water heater 20 does not supply hot water, or alternatively, the time when the supply amount of hot water from another water heater 20 in the past running-out-of-hot-water prevention time slot is smaller than the predetermined amount. Such operation enables the prevention of concentration of the period of power consumption.

### Embodiment 2

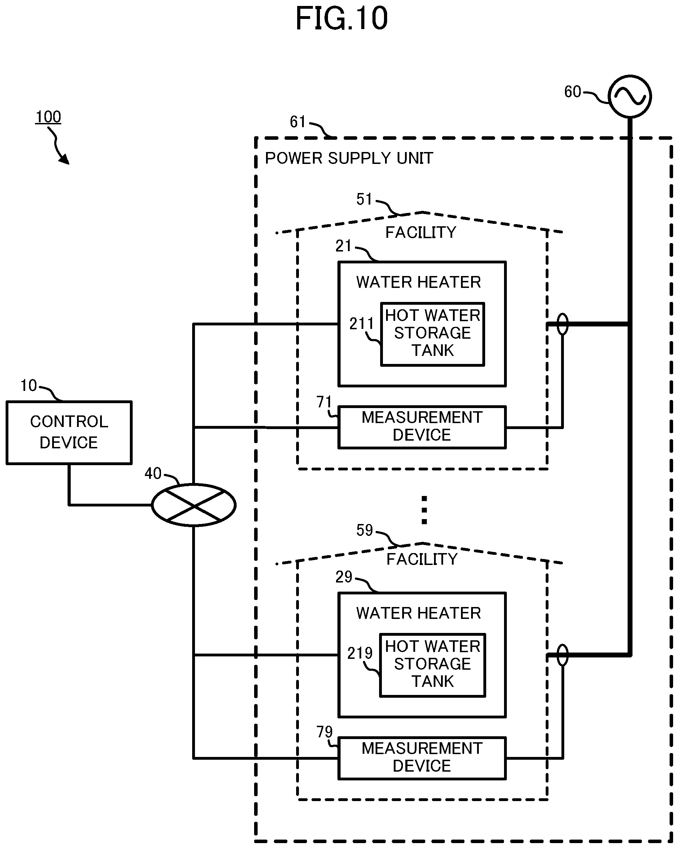

Description of Embodiment 2 below is centered on points of difference with respect to the aforementioned Embodiment 1. Further, structures that are the same or equivalent to those of the aforementioned Embodiment 1 are assigned the same reference symbols, and description of such structures is omitted or abbreviated. As illustrated in FIG. 10, the hot water supply system 100 according to the present embodiment differs from Embodiment 1 by including measurement devices 71 to 79 that measure power supplied via the power lines from the power source 60 to the facilities 51 to 59, respectively.

The measurement devices 71 to 79 are installed respectively together with the water heaters 21 to 29 in the facilities 51 to 59. Also, the measurement devices 71 to 79 use current transformers (CTs) to measure power supplied respectively to the facilities 51 to 59, and periodically transmit to the control device 10 via the network 40 data indicating results of the measurements.

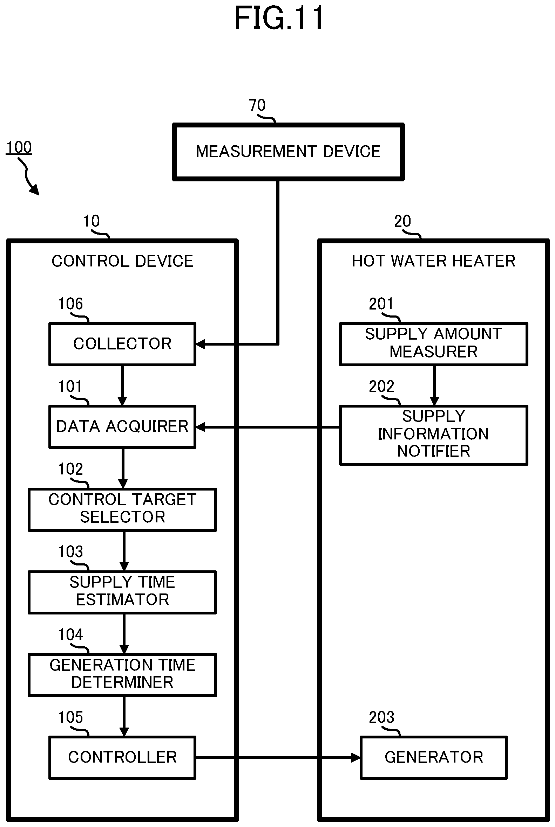

FIG. 11 illustrates functional configuration of the hot water supply system 100 according to the present embodiment. As illustrated in FIG. 11, the control device 10 according to the present embodiment includes a collector 106 that collects measurement results from a measurement device 70. The collector 106 is achieved mainly cooperatively between the processor 31 and the communicator 36 of the control device 10. The collector 106 collects the measurement values of power transmitted from the measurement devices 71 to 79 as the measurement results. Further, in FIG. 11, the measurement device 70 generically indicates the measurement devices 71 to 79.

The control device 10 according to the present embodiment executes processing similar to the control processing illustrated in FIG. 6. The control device 10, in steps S2 and S7, uses the data collected by the collector 106.

In step S2, the control target selector 102, on the basis of a change amount of a total of the measurement values collected by the collector 106, determines the unit count of the water heaters serving as the control target. For example, in the case in which the total of the measurement values is decreasing at the present time, power supplied to the power supply unit 61 is considered to possibly not increase rapidly even if more water heaters 20 are set to the water-heating mode. Here, in the case in which the total of the measurement values is decreasing, the control target selector 102 sets as the control target water heaters 20 of a unit count that is greater than a standard value. The standard value is half the total count of all the water heaters 20. However, in the case in which the total of the measurement values is increasing at the present time, the power supplied to the power supply unit 61 is considered to possibly increase rapidly when the water heaters 20 are set to the water-heating mode. Thus in the case in which the total of the measurement values is increasing, the control target selector 102 makes, as the control target, the water heaters 20 of a unit count that is smaller than the standard value. Such operation selects control target equipment on the basis of the change amount of the total of the measurement values.

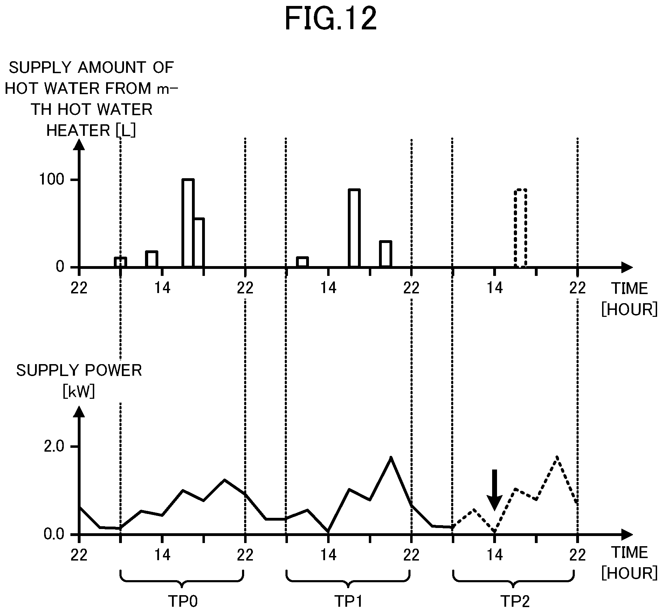

In step S7, the generation time determiner 104 determines, as the time for generation of hot water in the future running-out-of-hot-water prevention time slot, a time at which the measurement value in the past running-out-of-hot-water prevention time slot becomes minimum. FIG. 12 shows trending of the supply amount of hot water from the m-th water heater 20, and of power supplied to the facility in which the m-th water heater 20 is arranged. In the trending of power, the trending of the running-out-of-hot-water prevention time slot TP2 indicated by the dashed line illustrates trending that is similar to that of the running-out-of-hot-water prevention time slot TP1. As indicated by the black arrow in FIG. 12, in the case in which the supplied power in the running-out-of-hot-water prevention time slot TP2 trends similarly to the running-out-of-hot-water prevention time slot TP1, from the standpoint of avoiding the concentration of power consumption, the time at which the measurement value becomes minimum is suitable as the time for causing generation of hot water by the m-th water heater 20.

Further, the generation time determiner 104 may determine that a time at which the total of the measurement values collected by the collector 106 becomes minimum is the time of generation of hot water.

As described above, the control device 10 according to the present embodiment, on the basis of the measurement value of power, adjusts the unit count of the water heaters that become the control target. Such operation enables effective suppression of the peak of power consumption.

Further, the control device 10 causes generation of hot water by the water heater 20 at the time when the measurement value of power becomes minimum. Such operation enables avoidance of the occurrence of the generation of the peak of power consumption.

### Embodiment 3

Description of Embodiment 3 below is centered on points of difference with respect to the aforementioned Embodiment 2. Further, structures that are the same or equivalent to those of the aforementioned Embodiment 2 are assigned the same reference symbols, and description of such structures is omitted or abbreviated. The hot water supply system 100 according to the present embodiment differs from Embodiment 2 in that the generation time determiner 104 determines the time of generation of hot water while additionally considering a period required for the generation of hot water.

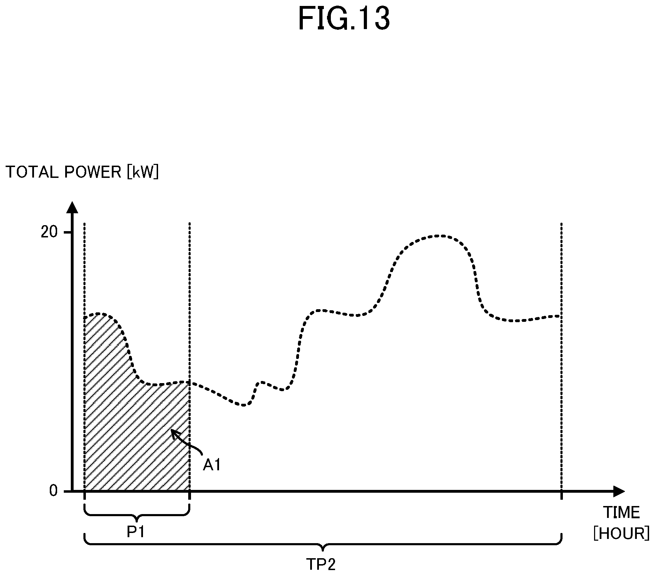

The control device 10 according to the present embodiment executes processing similar to that control processing illustrated in FIG. 6. However, although the present embodiment is similar to Embodiment 2 in that the generation time is set to be earlier than the time estimated in step S6, the present embodiment differs from Embodiment 2 in the specific method of determination of the time in step S7. This determination method of time is described with reference to FIGS. 13 to 16.

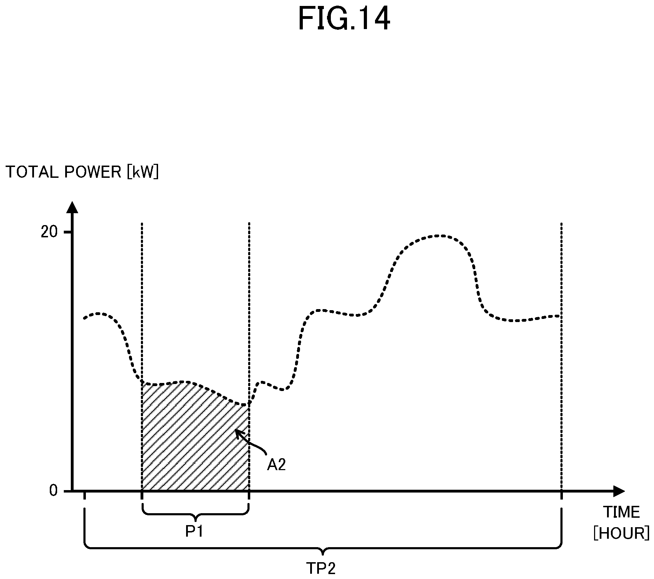

FIGS. 13 and 14 illustrate trending of total power, which is the total of power supplied to the facilities 51 to 59, in the running-out-of-hot-water prevention time slot TP2. The trending illustrated in FIGS. 13 and 14 is assumed to be similar to the trending of the total power in the running-out-of-hot-water prevention time slot TP1. The generation time determiner 104, within the running-out-of-hot-water prevention time slot TP2, scans a period P1 of a specified length, and searches for the period P1 at which an integrated value of the total power is less than or equal to a predetermined threshold. The length of the period P1 is the length of time required for generation of hot water, and for example, may be an average length of the period required for generation of hot water, or may be the length of the period calculated from the hot-water amount to be generated by the control target water heater 20. Further, the length of the period P1 may be set beforehand at the time of shipment from a factory, or may be input by the user. Further, the integrated value of the total power is equal to the energy indicated by the regions A1 and A2 indicated by hatching in FIGS. 13 and 14.

Here, the integrated value indicated by the area of the region A1 in FIG. 13 is larger than the threshold, and thus the period P1 indicated in FIG. 13 is inappropriate as the period for generation of hot water. However, the integrated value indicated by the area of the region A2 in FIG. 14 is smaller than the threshold, and thus the period P1 indicated in FIG. 14 is appropriate as the period for generation of hot water. Thus the generation time determiner 104 determines that the time for generation of hot water is a time belonging to the period P1 indicated in FIG. 14.

As described above, the control device 10 according to the present embodiment, in addition to considering the period required for generation of hot water, determines the period for generation of hot water to be the period in which the integrated value of the total power is less than or equal to the threshold.

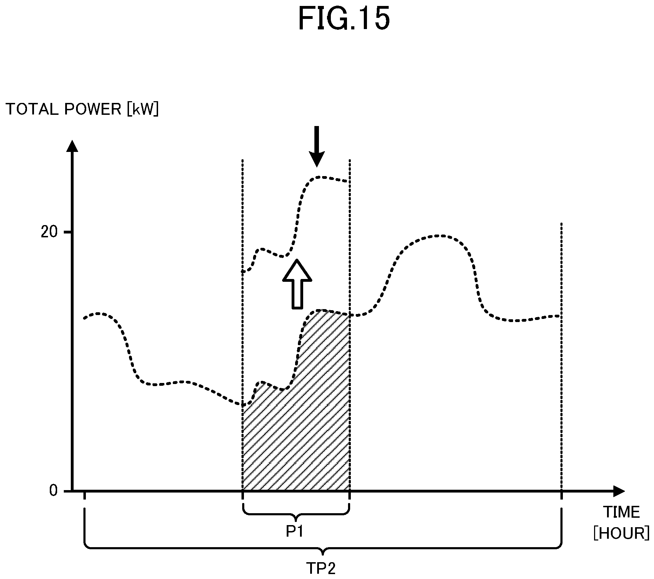

Here, FIG. 15 is used to describe a case in which the period required for generation of hot water is not considered. FIG. 15 illustrates trending of the total power when the time at which the total power is minimum is determined to be the generation time of hot water, and hot water is generated after the determined generation time. Although the period P1 required for generation of hot water starts from the time when the total power is minimum, the total power greatly increases in the period P1. When hot water is generated in the period P1 in this manner, the trending of the total power changes as indicated by the outlined-type arrow in FIG. 15, and as a result, a peak of power consumption, such as that indicated by the black arrow, may occur during the generation of hot water.

In contrast, in the present embodiment, hot water is generated in a period when the integrated value of the total power is less than or equal to the threshold, and thus avoiding the generation of the peak of power consumption is considered to be possible.

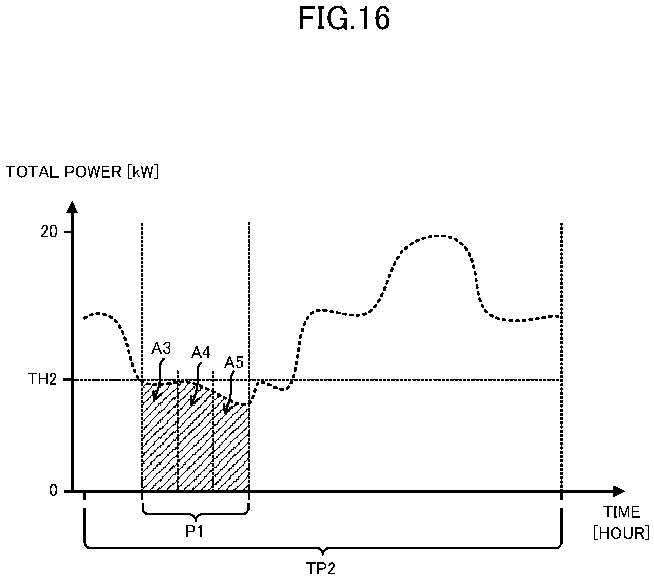

Further, the generation time determiner 104, as illustrated in FIG. 16, may determine the period for generation of hot water to be the period PI, which is formed from multiple time slots, in which the integrated value of the total power occurring in each of the time slots is less than a predetermined threshold value. That is to say, a time belonging to the period P1, in which all the integrated values indicated by the areas of the regions A3, A4, and A5 are smaller than the threshold, may be determined to be the time for generation of hot water. If the total energies of each of the time slots forming the period P1 are each less than or equal to the threshold, even though hot water is generated in the period P1, the generation of the peak of power consumption is considered to be unlikely. Further, the length of each of the time slots may be set to, 5 minutes, 30 minutes, or 1 hour.

Further, the generation time determiner 104, as illustrated in FIG. 16, may determine as the time for generation of hot water a time included in the period P1 in which the trending of the total power does not exceed a predetermined threshold TH2. If hot water is generated in the period P1 when the trending of the total power does not exceed the threshold value TH2, the generation of the peak of the power consumption is considered to be unlikely.

Although embodiments of the present disclosure are described above, the present disclosure is not limited to the aforementioned embodiments.

For example, together with the water heater 20 and the measurement device 70, a facility-internal controller that controls the water heater 20 and the measurement device 70 may be installed in each of the facilities 51 to 59, and the control device 10 may communicate with the water heater 20 and the measurement device 70 via the facility-internal controllers.

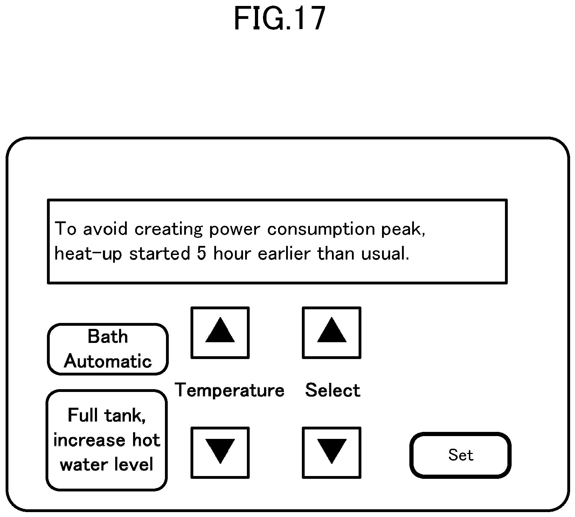

Further, the control device 10, by display of a screen image such as the example indicated in FIG. 17, may provide to the user notification of the control state and a control reason.

The measurement value measured by the measurement devices 71 to 79 is preferably a measurement value of power minus power consumed by the water heaters 21 to 29. Upon causing the water heater 20 to generate hot water, the control device 10, as illustrated in FIG. 5, shifts and adjusts the period for generation of energy consumption of the water heater. In the case in which adjustment as in the past is being performed in the past running-out-of-hot-water prevention time slot, adjustment is further performed on the basis of the post-adjustment trending of power, and control by the control device 10 is considered to be inappropriate. Thus the control device 10 can execute the appropriate control on the basis of the measurement value of power minus the power consumed by the water heaters 21 to 29.

Alternatively, the measurement values measured by the measurement devices 71 to 79 are equal to the power actually consumed in the facilities 51 to 59. The measurement devices 71 to 79 may measure the power supplied to the facilities 51 to 59 by summing the power consumption of each equipment arranged in the facilities 51 to 59. The measurement devices 71 to 79 may acquire or possess data associating the operation status and the power consumption of the equipment, may acquire the operation status of the equipment by communication with the equipment, and may obtain the power consumption of the equipment from the acquired operation status.

Further, in the aforementioned Embodiments 2 and 3, the power occurring in the future running-out-of-hot-water prevention time slot is considered to be equal to the measurement value occurring in the past running-out-of-hot-water prevention time slot. The measurement value of power occurring in the past running-out-of-hot-water prevention time slot, in the aforementioned manner, includes the measurement value of power occurring in the previous-slot running-out-of-hot-water prevention time slot, although this configuration is not limiting. For example, the measurement value of the past running-out-of-hot-water prevention time slot may be forecast by the trending of power occurring in the future running-out-of-hot-water prevention time slot on the basis of trending that occurs multiple past running-out-of-hot-water prevention time slots. The forecast value of power may be an average value of the measurement value occurring in two or more past running-out-of-hot-water prevention time slots. Further, the forecast value of the power may be an average value obtained by multiplying a large weighing coefficient times the measurement value occurring in a later running-out-of-hot-water prevention time slot among the multiple running-out-of-hot-water prevention time slots. Further, the forecast value of the power may be a time series of maximum values that combine maxima extracted from the past multiple running-out-of-hot-water prevention time slots.

Further, the measurement value measured by the measurement devices 71 to 79 may be an instantaneous value, or may be a measurement value of energy or average power occurring in a time segment having a certain appropriate length. The time segment length, for example, may be 30 minutes or 1 hour.

Further, although the control processing illustrated in FIG. 6 is repeatedly executed, this configuration is not limited. Prior to starting of the running-out-of-hot-water prevention time slot, the control device 10 may create a control schedule occurring in the running-out-of-hot-water prevention time slot, and may control the water heater 20 in accordance with the created control schedule, or alternatively, the control device 10 may control the water heater 20 by transmitting to the water heater 20 the created control schedule.

The functions of the control device 10 and the water heater 20 in the aforementioned embodiments can be achieved by dedicated hardware, or by a general computer system.

For example, a program 38 recorded on the auxiliary storage 33 of the control device 10 and the water heater 20 may be distributed on a computer-readable recording medium such as a flexible disc, compact disc read-only memory (CD-ROM), digital versatile disc (DVD), and the like may be distributed, and the program 38 may be installed on a computer to form a device that executes the aforementioned processing.

Further, the program 38 may be stored on a disc device included in a server on a communication network such as the Internet, and for example, may be superimposed on a carrier wave, and then downloaded to the computer.

Further, the aforementioned processing can be achieved by starting and running the program 38 while transferring the program 38 via the communication network.

Further, the above-described processing can be achieved by executing all or part of the program 38 on the server device and executing the program 38 while the computer receives and transmits information relating to the processing via the communication network.

When the above-described functions are, for example, achieved partly by an operating system (OS) or cooperatively with the OS and the application, the program other than the OS may be stored on the above recording medium for distribution or may be downloaded to the computer.

Further, the means for achieving the functions of the control device 10 and the water heater 20 is not limited to software, and the functions may be achieved by a portion or all the functions being achieved by dedicating hardware that includes circuits.

The foregoing describes some example embodiments for explanatory purposes. Although the foregoing discussion has presented specific embodiments, persons skilled in the art will recognize that changes may be made in form and detail without departing from the scope of the invention as defined by the claims. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure is suitable for operation of a water heater that consumes power and generates hot water.

### Reference Signs List

- 100: Hot water supply system
- 10: Control device
- 101: Data acquirer
- 102: Control target selector
- 103: Supply time estimator
- 104: Generation time determiner
- 105: Controller
- 106: Collector
- 20-29: Water heater
- 201: Supply amount measurer
- 202: Supply information notifier
- 203: Generator
- 211-219: Hot water storage tank
- 31: Processor
- 32: Main storage
- 33: Auxiliary storage
- 34: Inputter
- 35: Outputter
- 36: Communicator
- 37: Internal bus
- 38: Program
- 40: Network
- 51-59: Facility
- 60: Power source
- 61: Power supply unit
- 70-79: Measurement device
- L1,L2: Line

## Claims

1. A hot water supply system (100) comprising:
a first water heater (21) and a second water heater (29) configured to supply hot water from a hot water storage tank (211, 219) and operate in a mode in which, upon a remaining amount of hot water stored in the hot water storage tank (211, 219) becoming less than a first threshold, power is consumed to generate hot water; and
a control device (10) configured to, in a time slot (TP2) in which the first water heater (21) and the second water heater (29) operate in the mode, control one water heater (21), among the first water heater (21) and the second water heater (29), to cause the one water heater (21) to generate hot water prior to a time corresponding to a supply time for supply of hot water by the one water heater (21) in a past time slot (TP1), the first water heater (21) and the second water heater (29) operating in the mode in the past time slot (TP1), the one water heater (21) being a water heater (21) for which the remaining amount of hot water is smallest, or a water heater (21) for which a difference between the remaining amount of hot water and the first threshold is smallest, or a water heater (21) for which a hot-water amount to be generated is smallest;
the system being **characterized in that**
the control device (10) is configured
to collect measurement values of power supplied through a power line to a facility (51) in which the first water heater (21) is disposed, and to collect measurement values of power supplied through a power line to a facility (52) in which the second water heater (22) is disposed, and
to control the one water heater (21) to cause the one water heater (21) to generate hot water, in the time slot (TP2), in a period, prior to the time corresponding to the supply time, corresponding to a period at which an integrated value of a sum of the measurement values collected in the past time slot (TP1) is smaller than a second threshold.

2. The hot water supply system (100) according to claim 1, wherein the supply time is a time at which a supply amount of hot water by the one water heater (21) in the past time slot (TP1) is maximum.

3. The hot water supply system (100) according to claim 1, wherein the supply time is a time at which a supply amount of hot water by the one water heater (21) increases more than a supply amount of a time slot (TP0) prior to the past time slot (TP1).

4. The hot water supply system (100) according to claim 1 or 3, wherein the supply time is a time, from a time slot (TP3) prior to the past time slot (TP1), at which the one water heater (21) periodically supplies hot water.

5. The hot water supply system (100) according to any one of claims 1 to 4, wherein
the control device (10) is configured to control the one water heater (21) to cause the one water heater (21) to generate hot water at the time, in the time slot (TP2), prior to the time corresponding to the supply time, (i) when hot water is not supplied by another water heater (29), among the first water heater (21) and the second water heater (29), different from the one water heater (21), or (ii) at a time corresponding to a time, in the past time slot (TP1), at which the supply amount of hot water by the other water heater (29) is less than a predetermined amount.

6. The hot water supply system (100) according to any one of claims 1 to 5, further comprising:
measurement means (71) for measuring power supplied via a power line to a facility (51) where the one water heater (21) is disposed, wherein the control device (10) is configured to control the one water heater (21) to cause the one water heater (21) to generate hot water at the time, in the time slot (TP2), prior to the time corresponding to the supply time, corresponding to a time at which the power measured by the measurement means (71) is minimum in the past time slot (TP1).

7. The hot water supply system (100) according to any one of claims 1 to 6, wherein
the control device (10) is configured to
collect measurement values of power supplied through a power line to each of facilities in which water heaters are installed, the water heaters including the first water heater (21) and the second water heater (29), and
determine a unit count of water heaters selected as control target from among the water heaters based on a change amount of a sum of the collected measurement values.

8. A control device (10) comprising:
acquiring means (101) for acquiring data indicating a time of supplying of hot water from a first water heater (21) and a second water heater (29) that supply hot water from a hot water storage tank (211, 219) and configured to operate in a mode in which, upon a remaining amount of hot water stored in the hot water storage tank (211, 219) becoming less than a threshold, power is consumed to generate hot water; and
control means (105) configured to, in a time slot (TP2) in which the first water heater (21) and the second water heater (29) operate in the mode, control one water heater (21), among the first water heater (21) and the second water heater (29), to cause the one water heater (21) to generate hot water prior to a time corresponding to a supply time for supply of hot water by the one water heater (21) in a past time slot (TP1), the first water heater (21) and the second water heater (29) operating in the mode in the past time slot (TP1), the one water heater (21) being a water heater (21) for which the remaining amount of hot water is smallest, or a water heater (21) for which a difference between the remaining amount of hot water and the first threshold is smallest, or a water heater (21) for which a hot-water amount to be generated is smallest;
**characterized in that** the control device (10) is configured
to collect measurement values of power supplied through a power line to a facility (51) in which the first water heater (21) is disposed, and to collect measurement values of power supplied through a power line to a facility (52) in which the second water heater (22) is disposed, and
to control the one water heater (21) to cause the one water heater (21) to generate hot water, in the time slot (TP2), in a period, prior to the time corresponding to the supply time, corresponding to a period at which an integrated value of a sum of the measurement values collected in the past time slot (TP1) is smaller than a second threshold.

9. A control method comprising:
a step of, in a time slot (TP2) in which a first water heater (21) and a second water heater (29) that supply hot water from a hot water storage tank (211, 219) and operate in a mode in which, upon a remaining amount of hot water stored in the hot water storage tank (211, 219) becoming less than a threshold, power is consumed to generate hot water, controlling one water heater (21), among the first water heater (21) and the second water heater (29), to cause the one water heater (21) to generate hot water prior to a time corresponding to a supply time for supply of hot water by the one water heater (21) in a past time slot (TP1), the first water heater (21) and the second water heater (29) operating in the mode in the past time slot (TP1), the one water heater (21) being a water heater (21) for which the remaining amount of hot water is smallest, or a water heater (21) for which a difference between the remaining amount of hot water and the first threshold is smallest, or a water heater (21) for which a hot-water amount to be generated is smallest; **characterized by**
a step of collecting measurement values of power supplied through a power line to a facility (51) in which the first water heater (21) is disposed, and collecting measurement values of power supplied through a power line to a facility (52) in which the second water heater (22) is disposed,
wherein in the step of controlling, the one water heater (21) is controlled to cause the one water heater (21) to generate hot water, in the time slot (TP2), in a period, prior to the time corresponding to the supply time, corresponding to a period at which an integrated value of a sum of the measurement values collected in the past time slot (TP1) is smaller than a second threshold.

10. A computer program comprising instructions which, when the program is executed by a computer, cause the computer to carry out the steps of:
in a time slot (TP2) in which a first water heater (21) and a second water heater (29) that supply hot water from a hot water storage tank (211, 219) and operate in a mode in which, upon a remaining amount of hot water stored in the hot water storage tank (211, 219) becoming less than a threshold, power is consumed to generate hot water, controlling one water heater (21), among the first water heater (21) and the second water heater (29), to cause the one water heater (21) to generate hot water prior to a time corresponding to a supply time for supply of hot water by the one water heater (21) in a past time slot (TP1), the first water heater (21) and the second water heater (29) operating in the mode in the past time slot (TP1), the one water heater (21) being a water heater (21) for which the remaining amount of hot water is smallest, or a water heater (21) for which a difference between the remaining amount of hot water and the first threshold is smallest, or a water heater (21) for which a hot-water amount to be generated is smallest, and
collecting measurement values of power supplied through a power line to a facility (51) in which the first water heater (21) is disposed, and collecting measurement values of power supplied through a power line to a facility (52) in which the second water heater (29) is disposed,
wherein the one water heater (21) is controlled to cause the one water heater (21) to generate hot water, in the time slot (TP2), in a period, prior to the time corresponding to the supply time, corresponding to a period at which an integrated value of a sum of the measurement values collected in the past time slot (TP1) is smaller than a second threshold.

## Patentansprüche

1. Warmwasserversorgungssystem (100), umfassend:
einen ersten Warmwasserbereiter (21) und einen zweiten Warmwasserbereiter (29), die zum Versorgen mit Warmwasser aus einem Warmwasserspeicherbehälter (211, 219) und für einen Betriebsmodus ausgelegt sind, in dem, wenn eine in dem Warmwasserspeicherbehälter (211, 219) gespeicherte, verbleibende Menge an Warmwasser einen ersten Schwellenwert unterschreitet, Energie verbraucht wird, um Warmwasser zu erzeugen; und
eine Steuervorrichtung (10), die dazu ausgelegt ist, um in einem Zeitfenster (TP2), in dem der Betrieb des ersten Warmwasserbereiters (21) und des zweiten Warmwasserbereiters (29) in dem Modus erfolgt, einen Warmwasserbereiter (21) von dem ersten Warmwasserbereiter (21) und dem zweiten Warmwasserbereiter (29) zu steuern, um den einen Warmwasserbereiter (21) zu veranlassen, vor einem Zeitpunkt, der einem Versorgungszeitpunkt für die Versorgung mit Warmwasser durch den einen Warmwasserbereiter (21) in einem vergangenen Zeitfenster (TP1) entspricht, Warmwasser zu erzeugen, wobei der Betrieb des ersten Warmwasserbereiters (21) und des zweiten Warmwasserbereiters (29) im Modus des vergangenen Zeitfensters (TP1) erfolgt, wobei der eine Warmwasserbereiter (21) ein Warmwasserbereiter (21) ist, bei dem die verbleibende Menge an Warmwasser am kleinsten ist,
oder ein Warmwasserbereiter (21), bei dem eine Differenz zwischen der verbleibenden Menge an Warmwasser und dem ersten Schwellenwert am kleinsten ist,
oder ein Warmwasserbereiter (21), bei dem eine zu erzeugende Warmwassermenge am kleinsten ist;
wobei das System **dadurch gekennzeichnet ist, dass** die Steuervorrichtung (10) dazu ausgelegt ist, Messwerte der Energie, mit der eine Einrichtung (51), in der der erste Warmwasserbereiter (21) angeordnet ist, über eine Stromleitung versorgt wird, zu erfassen, und Messwerte der Energie, mit der eine Einrichtung (52), in der der zweite Warmwasserbereiter (22) angeordnet ist, über eine Stromleitung versorgt wird, zu erfassen, und den einen Warmwasserbereiter (21) zu steuern, um den einen Warmwasserbereiter (21) zu veranlassen, in dem Zeitfenster (TP2) vor dem dem Versorgungszeitpunkt entsprechenden Zeitpunkt in einem Zeitraum, der einem Zeitraum entspricht, in dem ein integrierter Wert einer Summe der im vergangenen Zeitfenster (TP1) erfassten Messwerte kleiner als ein zweiter Schwellenwert ist, Warmwasser zu erzeugen.

2. Warmwasserversorgungssystem (100) nach Anspruch 1, wobei der Versorgungszeitpunkt ein Zeitpunkt ist, zu dem eine durch den einen Warmwasserbereiter (21) bereitgestellte Versorgungsmenge an Warmwasser im vergangenen Zeitfenster (TP1) maximal ist.

3. Warmwasserversorgungssystem (100) nach Anspruch 1, wobei der Versorgungszeitpunkt ein Zeitpunkt ist, zu dem eine durch den einen Warmwasserbereiter (21) bereitgestellte Versorgungsmenge an Warmwasser mehr als eine Versorgungsmenge eines Zeitfensters (TP0) vor dem vergangenen Zeitfenster (TP1) zunimmt.

4. Warmwasserversorgungssystem (100) nach Anspruch 1 oder 3, wobei der Versorgungszeitpunkt ein Zeitpunkt von einem Zeitfenster (TP3) vor dem vergangenen Zeitfenster (TP1) ist, zu dem der eine Warmwasserbereiter (21) regelmäßig Warmwasser liefert.

5. Warmwasserversorgungssystem (100) nach einem der Ansprüche 1 bis 4, wobei die Steuervorrichtung (10) dazu ausgelegt ist, den einen Warmwasserbereiter (21) zu steuern, um den einen Warmwasserbereiter (21) zu veranlassen, Warmwasser zu dem Zeitpunkt im Zeitfenster (TP2) vor dem dem Versorgungszeitpunkt entsprechenden Zeitpunkt zu erzeugen, (i) zu dem durch keinen anderen Warmwasserbereiter (29) von dem ersten Warmwasserbereiter (21) und dem zweiten Warmwasserbereiter (29), der sich von dem einen Warmwasserbereiter (21) unterscheidet, eine Versorgung mit Warmwasser erfolgt, oder (ii) zu einem einem Zeitpunkt im vergangenen Zeitfenster (TP1) entsprechenden Zeitpunkt, zu dem die Versorgungsmenge an durch den anderen Warmwasserbereiter (29) bereitgestelltem Warmwasser kleiner als eine vorbestimmte Menge ist.

6. Warmwasserversorgungssystem (100) nach einem der Ansprüche 1 bis 5, ferner umfassend:
Messmittel (71) zum Messen der Energie, mit der eine Einrichtung (51), in der der eine Warmwasserbereiter (21) angeordnet ist, über eine Stromleitung versorgt wird, wobei die Steuervorrichtung (10) dazu ausgelegt ist, den einen Warmwasserbereiter (21) zu steuern, um den einen Warmwasserbereiter (21) zu dem Zeitpunkt im Zeitfenster (TP2) vor dem dem Versorgungszeitpunkt entsprechenden Zeitpunkt, der einem Zeitpunkt entspricht, zu dem die von den Messmitteln (71) gemessene Energie im vergangenen Zeitfenster (TP1) minimal ist, zum Erzeugen von Warmwasser zu veranlassen.

7. Warmwasserversorgungssystem (100) nach einem der Ansprüche 1 bis 6, wobei die Steuervorrichtung (10) dazu ausgelegt ist, Messwerte der Energie, mit der eine jede der Einrichtungen, in der Warmwasserbereiter installiert sind, über eine Stromleitung versorgt wird, zu erfassen,
wobei die Warmwasserbereiter den ersten Warmwasserbereiter (21) und den zweiten Warmwasserbereiter (29) einschließen, und eine Geräteanzahl der Warmwasserbereiter zu bestimmen, die unter den Warmwasserbereitern basierend auf einer Änderungsmenge einer Summe der erfassten Messwerte als Steuerungsziel ausgewählt wurden.

8. Steuervorrichtung (10), umfassend:
Bezugsmittel (101) zum Beziehen von Daten, die einen Zeitpunkt des Versorgens mit Warmwasser aus einem ersten Warmwasserbereiter (21) und einem zweiten Warmwasserbereiter (29) anzeigen, durch die eine Versorgung mit Warmwasser aus einem Warmwasserspeicherbehälter (211, 219) erfolgt und die für einen Betriebsmodus ausgelegt sind, in dem, wenn eine in dem Warmwasserspeicherbehälter (211, 219) gespeicherte, verbleibende Menge an Warmwasser einen Schwellenwert unterschreitet, Energie verbraucht wird, um Warmwasser zu erzeugen; und
Steuermittel (105), die dazu ausgelegt sind, um in einem Zeitfenster (TP2), in dem der Betrieb des ersten Warmwasserbereiters (21) und des zweiten Warmwasserbereiters (29) in dem Modus erfolgt, einen Warmwasserbereiter (21) von dem ersten Warmwasserbereiter (21) und dem zweiten Warmwasserbereiter (29) zu steuern, um den einen Warmwasserbereiter (21) zu veranlassen, vor einem Zeitpunkt Warmwasser zu erzeugen, der einem Versorgungszeitpunkt der Versorgung mit Warmwasser durch den einen Warmwasserbereiter (21) in einem vergangenen Zeitfenster (TP1) entspricht, wobei der Betrieb des ersten Warmwasserbereiters (21) und des zweiten Warmwasserbereiters (29) im Modus des vergangenen Zeitfensters (TP1) erfolgt, wobei der eine Warmwasserbereiter (21) ein Warmwasserbereiter (21) ist, bei dem die verbleibende Menge an Warmwasser am kleinsten ist,
oder ein Warmwasserbereiter (21), bei dem eine Differenz zwischen der verbleibenden Menge an Warmwasser und dem ersten Schwellenwert am kleinsten ist,
oder ein Warmwasserbereiter (21), bei dem eine zu erzeugende Warmwassermenge am kleinsten ist;
**dadurch gekennzeichnet, dass** die Steuervorrichtung (10) dazu ausgelegt ist, Messwerte der Energie, mit der eine Einrichtung (51), in der der erste Warmwasserbereiter (21) angeordnet ist, über eine Stromleitung versorgt wird, zu erfassen, und Messwerte der Energie, mit der eine Einrichtung (52), in der der zweite Warmwasserbereiter (22) angeordnet ist, über eine Stromleitung versorgt wird, zu erfassen, und den einen Warmwasserbereiter (21) zu steuern, um den einen Warmwasserbereiter (21) zu veranlassen, in dem Zeitfenster (TP2) vor dem dem Versorgungszeitpunkt entsprechenden Zeitpunkt in einem Zeitraum, der einem Zeitraum entspricht, in dem ein integrierter Wert einer Summe der im letzten Zeitfenster (TP1) erfassten Messwerte kleiner als ein zweiter Schwellenwert ist, Warmwasser zu erzeugen.

9. Steuerungsverfahren, umfassend:
einen Schritt in einem Zeitfenster (TP2), in dem ein erster Warmwasserbereiter (21) und ein zweiter Warmwasserbereiter (29), durch die eine Versorgung mit Warmwasser aus einem Warmwasserspeicherbehälter (211, 219) erfolgt und deren Betrieb in einem Modus erfolgt, in dem, wenn eine in dem Warmwasserspeicherbehälter (211, 219) gespeicherte, verbleibende Menge an Warmwasser einen Schwellenwert unterschreitet, Energie verbraucht wird, um Warmwasser zu erzeugen, Steuern eines Warmwasserbereiters (21) von dem ersten Warmwasserbereiter (21) und dem zweiten Warmwasserbereiter (29), um den einen Warmwasserbereiter (21) zu veranlassen, vor einem Zeitpunkt Warmwasser zu erzeugen, der einem Versorgungszeitpunkt der Versorgung mit Warmwasser durch den einen Warmwasserbereiter (21) in einem vergangenen Zeitfenster (TP1) entspricht,
wobei der Betrieb des ersten Warmwasserbereiters (21) und des zweiten Warmwasserbereiters (29) im Modus des vergangenen Zeitfensters (TP1) erfolgt, wobei der eine Warmwasserbereiter (21) ein Warmwasserbereiter (21) ist, bei dem die verbleibende Menge an Warmwasser am kleinsten ist,
oder ein Warmwasserbereiter (21), bei dem eine Differenz zwischen der verbleibenden Menge an Warmwasser und dem ersten Schwellenwert am kleinsten ist,
oder ein Warmwasserbereiter (21), bei dem eine zu erzeugende Warmwassermenge am kleinsten ist;
**gekennzeichnet durch** einen Schritt des Erfassens von Messwerten der Energie, mit der eine Einrichtung (51), in der der erste Warmwasserbereiter (21) angeordnet ist, über eine Stromleitung versorgt wird, und des Erfassens von Messwerten der Energie, mit der eine Einrichtung (52), in der der zweite Warmwasserbereiter (22) angeordnet ist, über eine Stromleitung versorgt wird,
wobei im Schritt des Steuerns der eine Warmwasserbereiter (21) gesteuert wird, um den einen Warmwasserbereiter (21) zu veranlassen, in dem Zeitfenster (TP2) vor dem dem Versorgungszeitpunkt entsprechenden Zeitpunkt in einem Zeitraum, der einem Zeitraum entspricht, in dem ein integrierter Wert einer Summe der im vergangenen Zeitfenster (TP1) erfassten Messwerte kleiner als ein zweiter Schwellenwert ist, Warmwasser zu erzeugen.

10. Computerprogramm, umfassend Anweisungen, die, wenn das Programm von einem Computer ausgeführt wird, den Computer veranlassen, die folgenden Schritte auszuführen:
in einem Zeitfenster (TP2), in dem ein erster Warmwasserbereiter (21) und ein zweiter Warmwasserbereiter (29), durch die eine Versorgung mit Warmwasser aus einem Warmwasserspeicherbehälter (211, 219) erfolgt und deren Betrieb in einem Modus erfolgt, in dem, wenn eine in dem Warmwasserspeicherbehälter (211, 219) gespeicherte, verbleibende Menge an Warmwasser einen Schwellenwert unterschreitet, Energie verbraucht wird, um Warmwasser zu erzeugen, Steuern eines Warmwasserbereiters (21) von dem ersten Warmwasserbereiter (21) und dem zweiten Warmwasserbereiter (29), um den einen Warmwasserbereiter (21) zu veranlassen, vor einem Zeitpunkt Warmwasser zu erzeugen, der einem Versorgungszeitpunkt der Versorgung mit Warmwasser durch den einen Warmwasserbereiter (21) in einem vergangenen Zeitfenster (TP1) entspricht, wobei der Betrieb des ersten Warmwasserbereiters (21) und des zweiten Warmwasserbereiters (29) im Modus des vergangenen Zeitfensters (TP1) erfolgt,
wobei der eine Warmwasserbereiter (21) ein Warmwasserbereiter (21) ist, bei dem die verbleibende Menge an Warmwasser am kleinsten ist,
oder ein Warmwasserbereiter (21), bei dem eine Differenz zwischen der verbleibenden Menge an Warmwasser und dem ersten Schwellenwert am kleinsten ist,
oder ein Warmwasserbereiter (21), bei dem eine zu erzeugende Warmwassermenge am kleinsten ist,
und Erfassen von Messwerten der Energie, mit der eine Einrichtung (51), in der der erste Warmwasserbereiter (21) angeordnet ist, über eine Stromleitung versorgt wird, und Erfassen von Messwerten der Energie, mit der eine Einrichtung (52), in der der zweite Warmwasserbereiter (29) angeordnet ist, über eine Stromleitung versorgt wird, wobei der eine Warmwasserbereiter (21) gesteuert wird, um den einen Warmwasserbereiter (21) zu veranlassen, in dem Zeitfenster (TP2) vor dem dem Versorgungszeitpunkt entsprechenden Zeitpunkt in einem Zeitraum, der einem Zeitraum entspricht, in dem ein integrierter Wert einer Summe der im vergangenen Zeitfenster (TP1) erfassten Messwerte kleiner als ein zweiter Schwellenwert ist, Warmwasser zu erzeugen.

## Revendications

1. Système d'alimentation en eau chaude (100) comprenant :
un premier moyen de chauffage d'eau (21) et un second moyen de chauffage d'eau (29) qui sont configurés pour alimenter de l'eau chaude depuis un réservoir de stockage d'eau chaude (211, 219) et pour fonctionner dans un mode dans lequel, suite au fait qu'une quantité restante d'eau chaude qui est stockée dans le réservoir de stockage d'eau chaude (211, 219) devient inférieure à un premier seuil, de l'énergie électrique est consommée pour générer de l'eau chaude ; et
un dispositif de commande (10) qui est configuré pour, dans une fenêtre temporelle (TP2) dans laquelle le premier moyen de chauffage d'eau (21) et le second moyen de chauffage d'eau (29) fonctionnent dans le mode, commander un moyen de chauffage d'eau considéré (21) parmi le premier moyen de chauffage d'eau (21) et le second moyen de chauffage d'eau (29), pour forcer le moyen de chauffage d'eau considéré (21) à générer de l'eau chaude avant un temps qui correspond à un temps d'alimentation pour alimenter de l'eau chaude au moyen du moyen de chauffage d'eau considéré (21) dans une fenêtre de temps passé (TP1), le premier moyen de chauffage d'eau (21) et le second moyen de chauffage d'eau (29) fonctionnant dans le mode dans la fenêtre de temps passé (TP1), le moyen de chauffage d'eau considéré (21) étant un moyen de chauffage d'eau (21) pour lequel la quantité restante d'eau chaude est la plus faible, ou un moyen de chauffage d'eau (21) pour lequel une différence entre la quantité restante d'eau chaude et le premier seuil est la plus faible, ou un moyen de chauffage d'eau (21) pour lequel une quantité d'eau chaude qui doit être générée est la plus faible ;
le système étant **caractérisé en ce que** :
le dispositif de commande (10) est configuré :
pour collecter des valeurs de mesure de l'énergie électrique qui est fournie par l'intermédiaire d'une ligne d'énergie électrique sur une installation (51) dans laquelle le premier moyen de chauffage d'eau (21) est disposé et pour collecter des valeurs de mesure de l'énergie électrique qui est fournie par l'intermédiaire d'une ligne d'énergie électrique sur une installation (52) dans laquelle le second moyen de chauffage d'eau (22) est disposé ; et
pour commander le moyen de chauffage d'eau considéré (21) pour forcer le moyen de chauffage d'eau considéré (21) à générer de l'eau chaude, dans la fenêtre temporelle (TP2), dans une période, avant le temps qui correspond au temps d'alimentation, qui correspond à une période au niveau de laquelle une valeur intégrée d'une somme des valeurs de mesure qui sont collectées dans la fenêtre de temps passé (TP1) est inférieure à un second seuil.

2. Système d'alimentation en eau chaude (100) selon la revendication 1, dans lequel le temps d'alimentation est un temps auquel une quantité d'alimentation d'eau chaude par le moyen de chauffage d'eau considéré (21) dans la fenêtre de temps passé (TP1) est maximum.

3. Système d'alimentation en eau chaude (100) selon la revendication 1, dans lequel le temps d'alimentation est un temps auquel une quantité d'alimentation d'eau chaude par le moyen de chauffage d'eau considéré (21) augmente plus qu'une quantité d'alimentation d'une fenêtre temporelle (TP0) avant la fenêtre de temps passé (TP1).

4. Système d'alimentation en eau chaude (100) selon la revendication 1 ou 3, dans lequel le temps d'alimentation est un temps, à partir d'une fenêtre temporelle (TP3) avant la fenêtre de temps passé (TP1), auquel le moyen de chauffage d'eau considéré (21) alimente périodiquement de l'eau chaude.

5. Système d'alimentation en eau chaude (100) selon l'une quelconque des revendications 1 à 4, dans lequel :
le dispositif de commande (10) est configuré pour commander le moyen de chauffage d'eau considéré (21) pour forcer le moyen de chauffage d'eau considéré (21) à générer de l'eau chaude au temps, dans la fenêtre temporelle (TP2), avant le temps qui correspond au temps d'alimentation, (i) lorsque de l'eau chaude n'est pas alimentée par un autre moyen de chauffage d'eau (29), parmi le premier moyen de chauffage d'eau (21) et le second moyen de chauffage d'eau (29), qui est différent du moyen de chauffage d'eau considéré (21), ou (ii) à un temps qui correspond à un temps, dans la fenêtre de temps passé (TP1), auquel la quantité d'alimentation d'eau chaude par l'autre moyen de chauffage d'eau (29) est inférieure à une quantité prédéterminée.

6. Système d'alimentation en eau chaude (100) selon l'une quelconque des revendications 1 à 5, comprenant en outre :
un moyen de mesure (71) pour mesurer l'énergie électrique qui est fournie via une ligne d'énergie électrique sur une installation (51) au niveau de laquelle le moyen de chauffage d'eau considéré (21) est disposé, dans lequel le dispositif de commande (10) est configuré pour commander le moyen de chauffage d'eau considéré (21) pour forcer le moyen de chauffage d'eau considéré (21) à générer de l'eau chaude au temps, dans la fenêtre temporelle (TP2), avant le temps qui correspond au temps d'alimentation, qui correspond à un temps auquel l'énergie électrique qui est mesurée par le moyen de mesure (71) est minimum dans la fenêtre de temps passé (TP1).

7. Système d'alimentation en eau chaude (100) selon l'une quelconque des revendications 1 à 6, dans lequel :
le dispositif de commande (10) est configuré pour :
collecter des valeurs de mesure de l'énergie électrique qui est fournie par l'intermédiaire d'une ligne d'énergie électrique sur chacune d'installations dans lesquelles des moyens de chauffage d'eau sont installés, les moyens de chauffage d'eau incluant le premier moyen de chauffage d'eau (21) et le second moyen de chauffage d'eau (29) ; et pour
déterminer un nombre d'unités de moyens de chauffage d'eau qui sont sélectionnés en tant que cible de commande parmi les moyens de chauffage d'eau sur la base d'une quantité de variation d'une somme des valeurs de mesure collectées.

8. Dispositif de commande (10) comprenant :
un moyen d'acquisition (101) pour acquérir des données qui indiquent un temps d'alimentation en eau chaude depuis un premier moyen de chauffage d'eau (21) et un second moyen de chauffage d'eau (29) qui alimentent de l'eau chaude depuis un réservoir de stockage d'eau chaude (211, 219) et qui sont configurés pour fonctionner dans un mode dans lequel, suite au fait qu'une quantité restante d'eau chaude qui est stockée dans le réservoir de stockage d'eau chaude (211, 219) devient inférieure à un premier seuil, de l'énergie électrique est consommée pour générer de l'eau chaude ; et
un moyen de commande (105) qui est configuré pour, dans une fenêtre temporelle (TP2) dans laquelle le premier moyen de chauffage d'eau (21) et le second moyen de chauffage d'eau (29) fonctionnent dans le mode, commander un moyen de chauffage d'eau considéré (21) parmi le premier moyen de chauffage d'eau (21) et le second moyen de chauffage d'eau (29) pour forcer le moyen de chauffage d'eau considéré (21) à générer de l'eau chaude avant un temps qui correspond à un temps d'alimentation pour alimenter de l'eau chaude au moyen du moyen de chauffage d'eau considéré (21) dans une fenêtre de temps passé (TP1), le premier moyen de chauffage d'eau (21) et le second moyen de chauffage d'eau (29) fonctionnant dans le mode dans la fenêtre de temps passé (TP1), le moyen de chauffage d'eau considéré (21) étant un moyen de chauffage d'eau (21) pour lequel la quantité restante d'eau chaude est la plus faible, ou un moyen de chauffage d'eau (21) pour lequel une différence entre la quantité restante d'eau chaude et le premier seuil est la plus faible, ou un moyen de chauffage d'eau (21) pour lequel une quantité d'eau chaude qui doit être générée est la plus faible ;
**caractérisé en ce que** :
le dispositif de commande (10) est configuré :
pour collecter des valeurs de mesure de l'énergie électrique qui est fournie par l'intermédiaire d'une ligne d'énergie électrique sur une installation (51) dans laquelle le premier moyen de chauffage d'eau (21) est disposé et pour collecter des valeurs de mesure de l'énergie électrique qui est fournie par l'intermédiaire d'une ligne d'énergie électrique sur une installation (52) dans laquelle le second moyen de chauffage d'eau (22) est disposé ; et
pour commander le moyen de chauffage d'eau considéré (21) pour forcer le moyen de chauffage d'eau considéré (21) à générer de l'eau chaude, dans la fenêtre temporelle (TP2), dans une période, avant le temps qui correspond au temps d'alimentation, qui correspond à une période au niveau de laquelle une valeur intégrée d'une somme des valeurs de mesure qui sont collectées dans la fenêtre de temps passé (TP1) est inférieure à un second seuil.

9. Procédé de commande comprenant :
une étape de, dans une fenêtre temporelle (TP2) dans laquelle un premier moyen de chauffage d'eau (21) et un second moyen de chauffage d'eau (29) alimentent de l'eau chaude en provenance d'un réservoir de stockage d'eau chaude (211, 219) et fonctionnent dans un mode dans lequel, suite au fait qu'une quantité restante d'eau chaude qui est stockée dans le réservoir de stockage d'eau chaude (211, 219) devient inférieure à un premier seuil, de l'énergie électrique est consommée pour générer de l'eau chaude, commande d'un moyen de chauffage d'eau considéré (21) parmi le premier moyen de chauffage d'eau (21) et le second moyen de chauffage d'eau (29) pour forcer le moyen de chauffage d'eau considéré (21) à générer de l'eau chaude avant un temps qui correspond à un temps d'alimentation pour alimenter de l'eau chaude au moyen du moyen de chauffage d'eau considéré (21) dans une fenêtre de temps passé (TP1), le premier moyen de chauffage d'eau (21) et le second moyen de chauffage d'eau (29) fonctionnant dans le mode dans la fenêtre de temps passé (TP1), le moyen de chauffage d'eau considéré (21) étant un moyen de chauffage d'eau (21) pour lequel la quantité restante d'eau chaude est la plus faible, ou un moyen de chauffage d'eau (21) pour lequel une différence entre la quantité restante d'eau chaude et le premier seuil est la plus faible, ou un moyen de chauffage d'eau (21) pour lequel une quantité d'eau chaude qui doit être générée est la plus faible ;
**caractérisé par** :
une étape de collecte des valeurs de mesure de l'énergie électrique qui est fournie par l'intermédiaire d'une ligne d'énergie électrique sur une installation (51) dans laquelle le premier moyen de chauffage d'eau (21) est disposé et à collecter des valeurs de mesure de l'énergie électrique qui est fournie par l'intermédiaire d'une ligne d'énergie électrique sur une installation (52) dans laquelle le second moyen de chauffage d'eau (22) est disposé ;
dans lequel, au niveau de l'étape de commande, le moyen de chauffage d'eau considéré (21) est commandé pour forcer le moyen de chauffage d'eau considéré (21) à générer de l'eau chaude, dans la fenêtre temporelle (TP2), dans une période, avant le temps qui correspond au temps d'alimentation, qui correspond à une période au niveau de laquelle une valeur intégrée d'une somme des valeurs de mesure qui sont collectées dans la fenêtre de temps passé (TP1) est inférieure à un second seuil.

10. Progiciel comprenant des instructions qui, lorsque le programme est exécuté par un ordinateur, forcent l'ordinateur à mettre en œuvre les étapes de :
dans une fenêtre temporelle (TP2) dans laquelle un premier moyen de chauffage d'eau (21) et un second moyen de chauffage d'eau (29) alimentent de l'eau chaude en provenance d'un réservoir de stockage d'eau chaude (211, 219) et fonctionnent dans un mode dans lequel, suite au fait qu'une quantité restante d'eau chaude qui est stockée dans le réservoir de stockage d'eau chaude (211, 219) devient inférieure à un premier seuil, de l'énergie électrique est consommée pour générer de l'eau chaude, commande d'un moyen de chauffage d'eau considéré (21) parmi le premier moyen de chauffage d'eau (21) et le second moyen de chauffage d'eau (29) pour forcer le moyen de chauffage d'eau considéré (21) à générer de l'eau chaude avant un temps qui correspond à un temps d'alimentation pour alimenter de l'eau chaude au moyen du moyen de chauffage d'eau considéré (21) dans une fenêtre de temps passé (TP1), le premier moyen de chauffage d'eau (21) et le second moyen de chauffage d'eau (29) fonctionnant dans le mode dans la fenêtre de temps passé (TP1), le moyen de chauffage d'eau considéré (21) étant un moyen de chauffage d'eau (21) pour lequel la quantité restante d'eau chaude est la plus faible, ou un moyen de chauffage d'eau (21) pour lequel une différence entre la quantité restante d'eau chaude et le premier seuil est la plus faible, ou un moyen de chauffage d'eau (21) pour lequel une quantité d'eau chaude qui doit être générée est la plus faible ; et
de collecte de valeurs de mesure de l'énergie électrique qui est fournie par l'intermédiaire d'une ligne d'énergie électrique sur une installation (51) dans laquelle le premier moyen de chauffage d'eau (21) est disposé et de collecte de valeurs de mesure de l'énergie électrique qui est fournie par l'intermédiaire d'une ligne d'énergie électrique sur une installation (52) dans laquelle le second moyen de chauffage d'eau (29) est disposé ;
dans lequel le moyen de chauffage d'eau considéré (21) est commandé pour forcer le moyen de chauffage d'eau considéré (21) à générer de l'eau chaude, dans la fenêtre temporelle (TP2), dans une période, avant le temps qui correspond au temps d'alimentation, qui correspond à une période au niveau de laquelle une valeur intégrée d'une somme des valeurs de mesure qui sont collectées dans la fenêtre de temps passé (TP1) est inférieure à un second seuil.
